# FASCICULE DE BREVET EUROPEEN

(11) **EP 0 653 343 B1**
(45) Date de publication et mention de la délivrance du brevet: **14.05.1997**
(21) Numéro de dépôt: 94402566.7
(22) Date de dépôt: 14.11.1994
(51) Int. Cl.: B62D 13/04

(54) **Installation de commande de l'orientation des roues arrière d'une remorque**
Steuereinrichtung zum Lenken der Hinterräder eines Anhängers
Control device for steering of the rear wheels of a trailer

(30) Priorité: 17.11.1993 FR 9313725
(43) Date de publication de la demande: 17.05.1995
(73) Titulaire: COCHET S.A., F-72130 Souge le Ganelon (FR)
(72) Inventeur: Cochet, Jean-Louis, F-72130 Souge Le Ganelon (FR)
(74) Mandataire: Faber, Jean-Paul

(56) Documents cités:
- EP-A- 0 266 546
- CH-A- 362 924
- DE-C- 813 344
- DE-U- 8 908 204
- FR-A- 488 834

## Description

La présente invention concerne une installation de commande des roues arrières d'une remorque.

L'invention vise des remorques ayant une longueur importante et destinées, plus particulièrement, au transport de machines encombrantes qui ne peuvent être déplacées sur les routes.

L'invention s'applique, plus particulièrement, à des remorques qui, à une extrémité antérieure d'une plate-forme, sont pourvues d'un timon sur lequel s'articule une barre d'attelage destinée à être fixée aux bras de relevage d'un tracteur, tandis que l'extrémité postérieure de ladite plate-forme comporte un bâti articulé supportant les roues et avec interposition de vérins de manière que les roues puissent basculer verticalement afin que la plate-forme puisse être abaissée jusqu'au sol pour le chargement d'une machine à transporter, tandis qu'après chargement, elle puisse être relevée pour le transport.

Une telle remorque présente l'inconvénient qu'elle est difficilement manoeuvrable dans des petits chemins et qu'elle ne peut tourner dans des courbes accentuées.

L'un des buts de la présente invention est de réaliser une installation de commande pour orienter les roues arrières en même temps que le tracteur tourne afin de faciliter les manoeuvres.

L'installation, selon l'invention, vise la commande de l'orientation des roues arrières d'une remorque destinée au transport de machines et, plus particulièrement, de machines agricoles, ladite remorque présentant une plate-forme dont une extrémité antérieure est solidaire d'un timon sur lequel est articulée une barre d'attelage destinée à être reliée aux barres de relevage d'un tracteur, tandis que l'extrémité postérieure est supportée par deux roues montées sur des chapes orientables solidaires des axes supportés par un bâti et reliés par une barre d'accouplement, ledit bâti étant monté articulé à l'extrémité postérieure de la plate-forme avec interposition de vérins de manière que la plate-forme puisse être abaissée jusqu'au sol pour le chargement, puis après chargement, soulevée pour le transport, ladite installation étant caractérisée en ce que le timon comporte un axe vertical sur lequel est monté tournant un manchon solidaire radialement, d'une part, d'une barre reliée par une liaison cinématique à un organe de commande d'un vérin inséré entre la barre d'accouplement et le bâti et relié à un distributeur, ledit organe de commande comportant un contacteur relié par une liaison cinématique à l'un des axes d'orientation des roues et comportant un bouton susceptible d'occuper une première position de commande de fermeture d'un circuit électrique de commande du distributeur pour engendrer l'allongement du vérin, une seconde position de commande du raccourcissement du vérin et une position neutre dans laquelle lesdits circuits électriques sont ouverts, ladite liaison cinématique étant reliée à des poussoirs pour commander le bouton en fonction de la position angulaire de la barre radiale, des moyens étant prévus pour anihiler les moyens de commande de l'orientation des roues et maintenir une position neutre dans laquelle la remorque se déplace en ligne droite.

Grâce à cette disposition une modification de la fonction angulaire de la barre d'attelage engendre automatiquement l'orientation des roues arrières de la remorque dans le même sens.

Suivant une caractéristique constructive, le manchon comporte une tige, des moyens élastiques pour tendre à maintenir la tige dans une position d'équilibre parallèle à l'axe du timon, la barre d'attelage étant pourvue de taquets destinés à coopérer avec la tige de manière à faire basculer celle-ci dans un sens ou dans l'autre en correspondance avec l'orientation de ladite barre d'attelage.

Afin que le système ne puisse se bloquer et ne puisse être endommagé dans des virages serrés, les taquets sont montés basculants contre l'action de moyens élastiques.

Lorsque la remorque est déplacée sur des routes, il peut ne pas être souhaitable que le système fonctionne; à cet effet, la tige est de longueur réglable. Ainsi on peut éloigner la tige des taquets et le système est mis au repos.

Suivant un détail constructif, la tige comporte une douille montée coulissante et terminée par une tête en forme de tronc de cône coopérant avec les taquets.

Suivant encore un détail constructif, les ressorts de traction sont insérés entre des pattes solidaires de la douille et des pattes solidaires du manchon, ladite douille étant reliée par un câble à un levier mobile le long d'un secteur cranté.

Suivant une autre caractéristique constructive, le manchon est solidaire d'un point intermédiaire médian d'une plaquette dont les extrémités sont reliées par des ressorts à un point fixe du timon de manière à maintenir la tige dans une position d'équilibre parallèle à l'axe du timon.

Enfin, suivant une caractéristique de détail, la barre radiale est reliée par une tringle à une platine montée pivotante librement sur un axe relié à l'une des chapes de l'orientation des roues et sur lequel est fixé le contacteur, sur ledit axe étant montés, tournant librement, deux manchons dont l'un est solidaire d'un bras et l'autre d'un second bras, les bras étant disposés, de part et d'autre du contacteur et supportant chacun un poussoir coopérant avec le bouton, des moyens élastiques tendant à rapprocher les bras l'un de l'autre et la platine comportant deux butées destinées à coopérer l'une avec un bras, l'autre avec l'autre, de manière que lorsque la platine est déplacée angulairement, l'un des bras s'écarte, tandis que le poussoir de l'autre bras, en coopérant avec le bouton, assure la fermeture du circuit électrique correspondant de la commande du vérin jusqu'à ce que le bouton du contacteur, entraîné par la chape, vienne rencontrer le poussoir de l'autre bras pour ramener le bouton dans la position neutre.

Suivant une variante de réalisation, la barre radiale est reliée à la platine par un lien souple, celle-ci étant montée pivotante contre l'action d'un ressort de rappel.

Suivant un autre mode de réalisation, afin d'éviter que les roues de la remorque, lors des déplacements sur route, risquent de se déplacer angulairement, le bâti comporte un vérin de verrouillage des roues dans la position neutre.

Suivant une caractéristique de détail, le vérin de verrouillage est un vérin à simple effet comportant un ressort de rappel tendant à l'amener en position verrouillée et il est relié au distributeur sur une dérivation du circuit d'alimentation du vérin de commande de l'orientation des roues et il est prévu un circuit électrique de commande comportant un inverseur pour couper l'alimentation du contacteur de la platine afin que, lorsque les roues occupent la position neutre, le vérin de verrouillage n'étant pas alimenté, il occupe automatiquement la position verrouillée.

Suivant encore une caractéristique de détail, l'une des chapes des roues comporte une échancrure, tandis que le vérin de verrouillage est pourvu d'un coin destiné à s'insérer dans l'échancrure.

Enfin, suivant une dernière caractéristique, entre la platine et l'une des chapes de l'orientation des roues, sur la liaison cinématique, est insérée une seconde platine tournant sur un axe fixe sur lequel est calé un contacteur pourvu d'un bouton, la seconde platine comportant deux poussoirs coopérant avec le bouton et susceptibles, l'un d'être écarté du bouton lors du pivotement de la seconde platine dans un sens et l'autre dudit bouton lors du pivotement de ladite seconde platine dans l'autre sens, ledit contacteur étant relié à des circuits pour commander le distributeur pour ramener les roues en position neutre, dans cette position le contacteur coupant les circuits de commande de sorte que le vérin de verrouillage, sous l'action de son ressort de rappel, vient occuper la position verrouillée.

L'invention va maintenant être décrite avec plus de détails en se référant à des modes de réalisation particuliers donnés à titre d'exemple seulement et représentés aux dessins annexés, dans lesquels :
Figure 1 est une vue en plan montrant une installation de commande de l'orientation des roues arrières d'une remorque.
Figure 2 est une vue en plan montrant les roues orientées de la remorque de la figure 1.
Figure 3 est une vue en plan à plus grande échelle d'un détail.
Figure 4 montre le fonctionnement de la partie de la figure 3 dans un virage.
Figure 5 montre en plan le détail de la figure 3 dans une position d'arrêt.
Figure 6 est une vue en plan correspondant à la figure 5, le tracteur étant dans la position de virage.
Figure 7 est une vue en perspective du dispositif de commande du vérin.
Figure 8 est une vue en plan, à plus grande échelle, du dispositif de commande du vérin.
Figure 9 montre le dispositif de commande du vérin dans une position au début d'un virage.
Figure 10 montre le dispositif de commande du vérin, les roues étant braquées.
Figure 11 montre schématiquement, en plan , une variante de réalisation de l'invention.
Figure 12 est une vue, en plan, à plus grande échelle d'un détail, les roues étant en position neutre.
Figure 13 est une vue correspondant à la figure 12, les roues étant braquées.

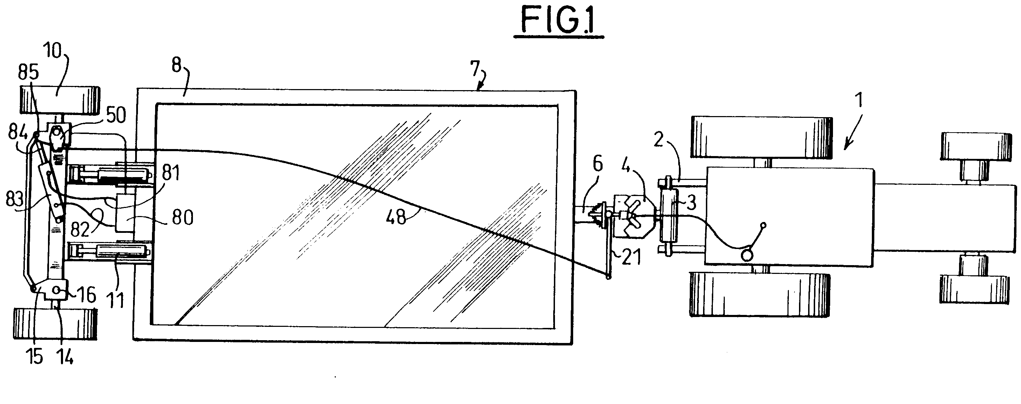

A la figure 1, on a représenté un tracteur 1 comportant des barres de relevage 2 sur lesquelles est montée une barre d'attelage 3.

La barre d'attelage 3 est solidaire d'un support 4 comportant un axe vertical 5 sur lequel s'articule un timon 6 d'une remorque 7 constituée par une plate-forme 8 dont l'extrémité arrière est reliée à un bâti 9 supporté par deux roues 10.

Le bâti 9 est relié articulé à la plate-forme 8 avec interposition de vérins 11 de manière que ladite plate-forme puisse être abaissée pour reposer sur le sol afin de recevoir des engins tels que des machines agricoles, puis après chargement, être relevée afin de permettre le transport desdits engins.

Chaque roue 10 tourne folle sur un axe 14 qui est solidaire d'une chape 15 calée sur un axe vertical 16 guidé sur un bâti 9, lesdits chapes étant reliées par une barre d'accouplement 17 de manière que lesdites roues puissent être orientées simultanément et maintenues parallèles.

Sur le timon 6 s'érige un axe vertical 20 sur lequel est monté un manchon 25 qui est solidaire, d'une part, d'une barre radiale 21 et, d'autre part, d'une plaquette 22.

Entre la plaquette 22 et une barrette 23 sont insérés des ressorts 24 qui tendent à ramener la plaquette 22 dans une position d'équilibre dans laquelle elle s'étend perpendiculairement au timon 6.

Le manchon 25 est également solidaire d'une tige 26, qui dans la position d'équilibre s'étend coaxialement au timon 6 et sur laquelle est montée coulissante une douille 28.

La douille 28 est pourvue de deux pattes 29 sur lesquelles sont accrochées les extrémités des ressorts de traction 31 dont les autres extrémités sont accrochées à des pattes 30 solidaires du manchon 25.

La douille 28 est terminée par une tête tronconique 33 qui est solidaire de l'une des extrémités d'un câble 34 dont l'autre extrémité est fixée à une extrémité 36 d'un levier 37 articulé sur un axe 38 et susceptible d'être bloqué sur un secteur denté 39.

Ainsi, la douille 28 peut occuper une position active dans laquelle elle est éloignée du manchon 25 et une position inactive dans laquelle elle bute contre ledit manchon 25.

Le support 4 comporte deux taquets 41, 41a qui sont montés basculants sur des axes 42 et sont normalement maintenus appliqués contre des butées 43 par des ressorts 44.

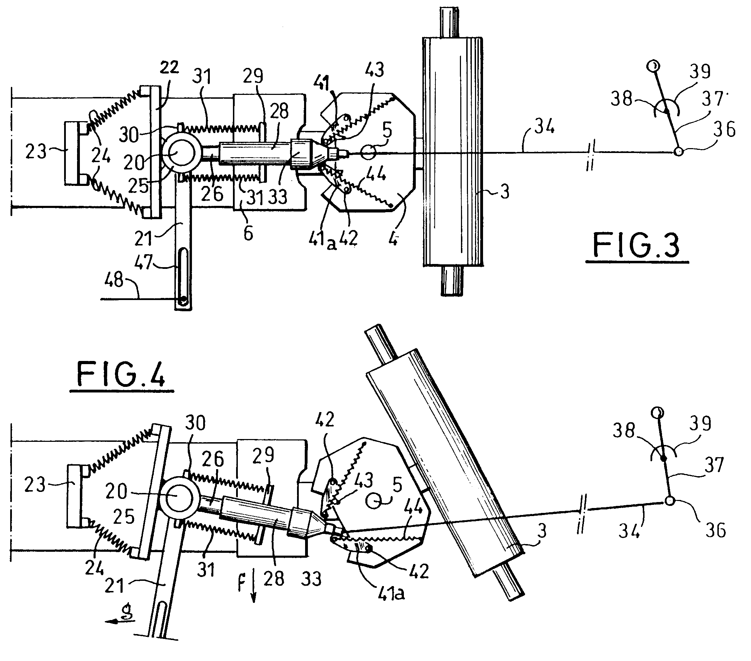

Dans la position active de la douille 28, les taquets coopèrent avec le tronc de cône 33 (voir figures 3 et 4).

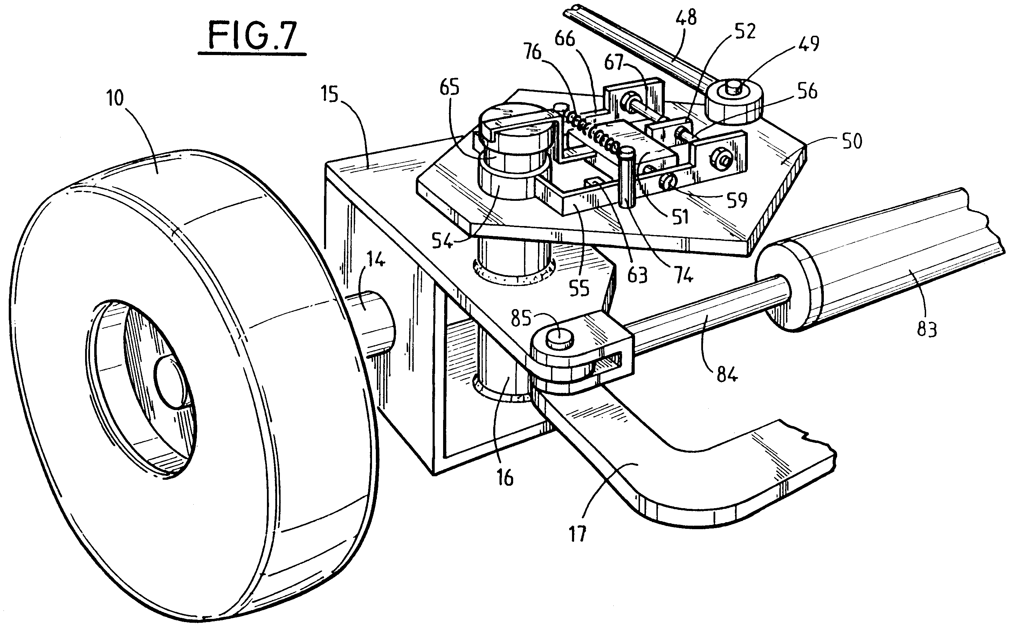

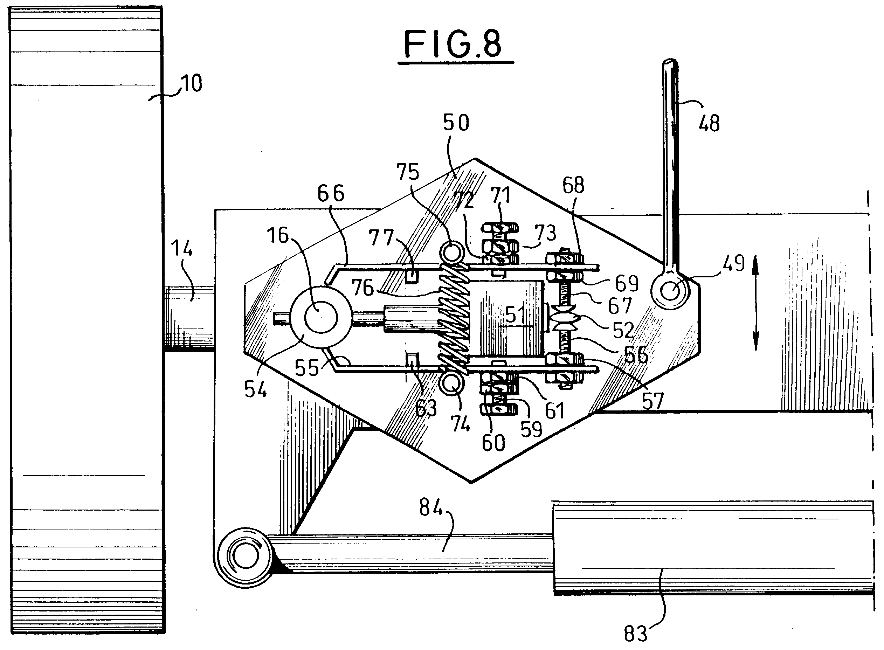

La barre 21 comporte, au voisinage de son extrémité libre, une lumière allongée 47 dans laquelle coulisse une extrémité d'une tringle 48 dont l'autre extrémité est reliée, articulée par un axe 49 à une platine 50 (voir figures 7 à 10).

La platine 50 tourne libre sur l'un des axes 16, sur ledit axe étant fixé un contacteur électrique 51 comportant un bouton 52 susceptible d'osciller dans deux sens opposés pour fermer deux circuits électriques, et d'occuper une position neutre dans laquelle les deux circuits sont ouverts.

Sur l'axe 16 est monté un premier manchon 54 solidaire d'un bras 55 portant à son extrémité libre un poussoir 56. Le téton 56 présente un filetage sur lequel se vissent deux écrous 57 permettant de régler la position du poussoir 56.

Il est également prévu une tige 59 se vissant dans un taraudage du bras 55 et sur laquelle se vissent un écrou 60 et un contre-écrou 61 pour parfaire le réglage du poussoir 56.

Sur la platine 50 s'érige une butée 63 destinée à coopérer avec le bras 55.

Sur l'axe 16 est monté un second manchon 65 solidaire d'un bras 66 dont l'extrémité libre comporte un poussoir 67 présentant un filetage et traversant un trou du bras 66, le filetage recevant des écrous de fixation 68 et 69.

Le bras 66 comporte une vis 71 vissée dans un taraudage correspondant avec un écrou 72 et un contre-écrou 73. La vis 71 est destinée à parfaire le réglage du poussoir 67.

Les bras 55 et 66 sont solidaires respectivement de barreaux 74 et 75 qui sont reliés par un ressort de traction 76.

Sur la platine 50 s'érige une butée 77 destinée à coopérer avec le bras 66.

Sur un pivot 85 sur lequel s'articule l'une des extrémités de la barre d'accouplement 17 sur une des chapes 15 est articulée l'extrémité libre de la tige 84 d'un vérin 83 dont le corps est articulé sur un axe 86 du bâti 9.

Le vérin 83 est un vérin à double effet et est relié par des conduites 81 et 82 à un distributeur 80 porté par l'extrémité arrière de la plate-forme 8.

Le contacteur 51 commande le distributeur 80 de manière à commander l'allongement du vérin lorsque le tracteur tourne vers la gauche, ou, au contraire le raccourcissement de celui-ci, lorsque le tracteur tourne vers la droite.

Le fonctionnement est le suivant :

La douille 28 étant maintenue écartée du manchon 25 contre l'action des ressorts 31, par le câble 34 (voir figures 1 et 3), l'installation est opérationnelle.

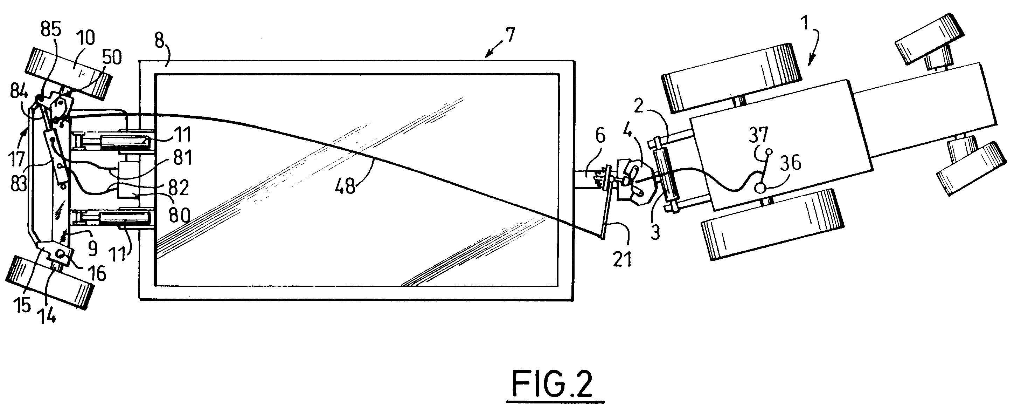

Si le tracteur 1 tourne vers la gauche (voir figures 2 et 4), la barre d'attelage 3 pivote sur l'axe 5 et la tête 33 vient rencontrer le taquet 41 qui pousse la douille 28 dans le sens de la flèche f (voir figures 2 et 4), le manchon 25 pivote alors contre l'action des ressorts 24 de sorte que la barre radiale 21 pivote dans le sens de la flèche g, la tringle 48 faisant tourner la platine 50.

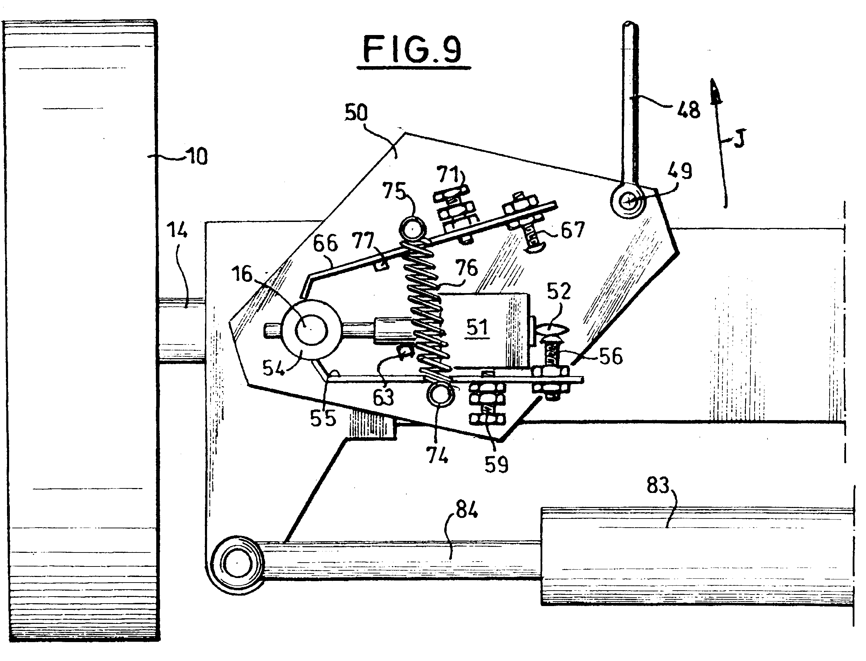

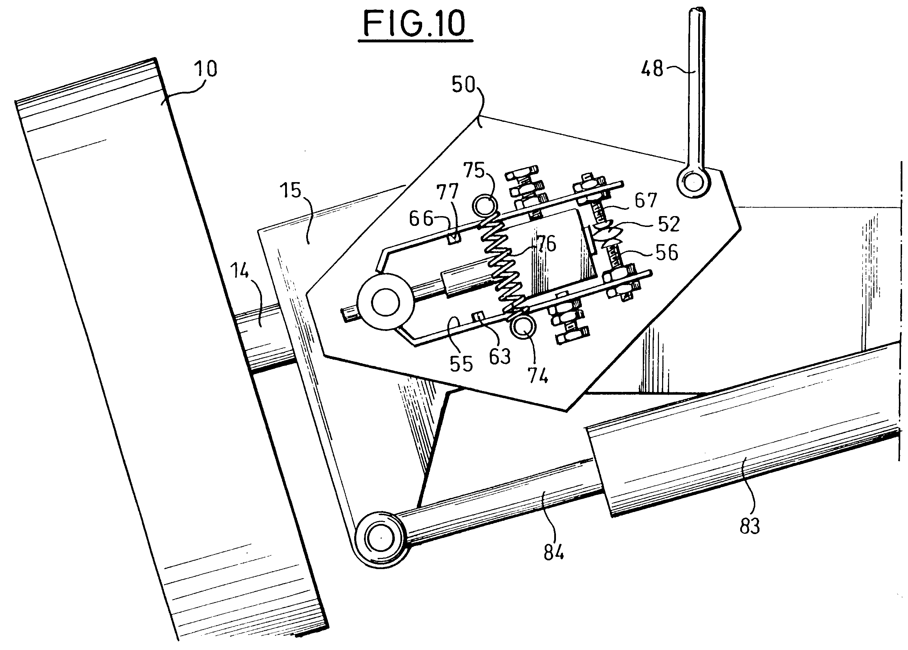

Lors de la rotation de la platine 50, par exemple dans le sens de la flèche j (voir figure 9), la butée 77, en coopérant avec le bras 66, entraîne celui-ci contre l'action du ressort 76 de sorte que le poussoir 56 fait basculer le bouton 52 qui commande le distributeur 80; celui-ci par la conduite 81, envoie de l'huile sous pression dans le vérin 83 commandant le raccourcissement de celui-ci. Ainsi, la chape 15 pivote en entraînant l'axe 16. Lors de ce pivotement, le contacteur 51 qui est solidaire de l'axe 16 pivote avec celui-ci jusqu'à ce que le bouton 52 rencontre le poussoir 67 qui, en butant contre ce dernier, ouvre le circuit électrique (voir figure 10). Ainsi les roues 10 sont orientées dans le sens correspondant au virage.

On conçoit que si la tringle 48 est actionnée dans le sens opposé le bras 55, poussé par la butée 63, s'écarte du contacteur 51 et que le poussoir 67 pousse le bouton 52 fermant le circuit électrique commandant le distributeur 80 pour l'allongement du vérin 83.

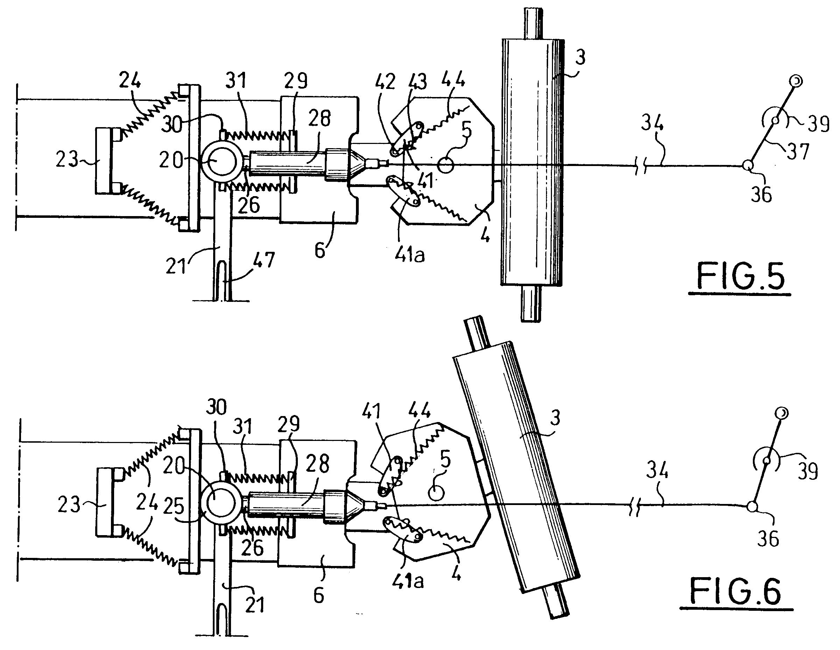

Lorsque le tracteur 1 et la remorque 7 se déplacent sur une grande route, il est souhaitable que l'installation ne fonctionne pas car le pivotement des roues 10 sur des grandes courbes risquerait de déporter la remorque. Comme on le voit aux figures 5 et 6 pour bloquer l'installation, il suffit d'agir sur le levier 37 afin de détendre le câble 34, la douille 28, avec l'action des ressorts 31, coulisse sur la tige 26 de manière que la tête 33 s'écarte des taquets 41, 41a. Ainsi, même dans les virages (voir figure 6) ladite tête 33 ne peut plus coopérer avec les taquets 41, 41a de sorte que le manchon 25 qui est maintenu dans sa position d'équilibre par les ressorts 24 ne pivote pas.

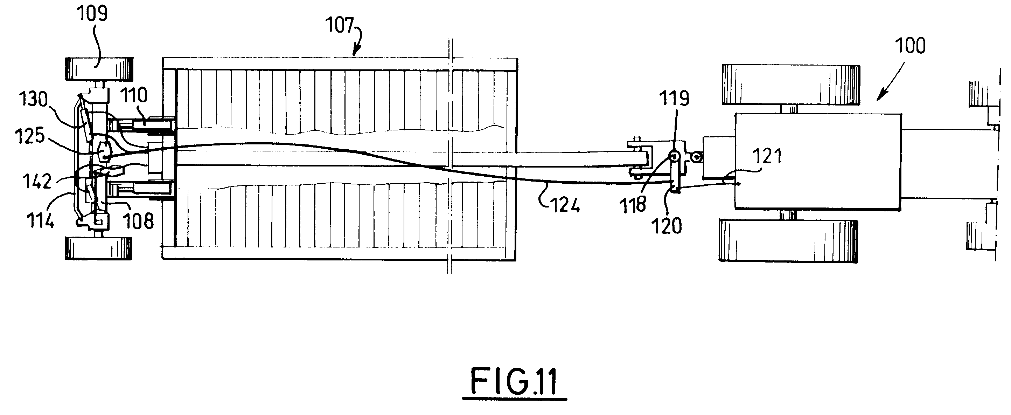

Les figures 11 à 13 montrent une variante de réalisation de l'invention.

A la figure 11, on a représenté un tracteur 100 à l'arrière duquel est attelé le timon 106 d'une remorque 107 constituée d'une plate-forme dont l'extrémité arrière est reliée par des vérins 110 à un bâti 108 comportant deux roues 109.

Ce montage est du même type que celui décrit dans les figures précédentes et ne sera pas expliqué ici en détail.

L'une des roues 109 est portée par une chape 112 articulée sur un axe vertical 115 du bâti 108, tandis que l'autre roue 109 est portée par une chape 113 articulée sur un axe vertical 116 du bâti 108, les chapes étant reliées par une barre d'accouplement 114.

Sur le timon 106 s'érige un axe vertical 118 sur lequel est engagé un manchon 119 solidaire d'une barre radiale 120 qui est reliée par un câble 121 au tracteur 100 de manière que, lorsque celui-ci tourne dans un sens, la barre tourne dans le même sens.

La barre radiale 120 est solidaire, à son extrémité libre de l'une des extrémités d'un lien 124 dont l'autre extrémité est fixée à une platine 125.

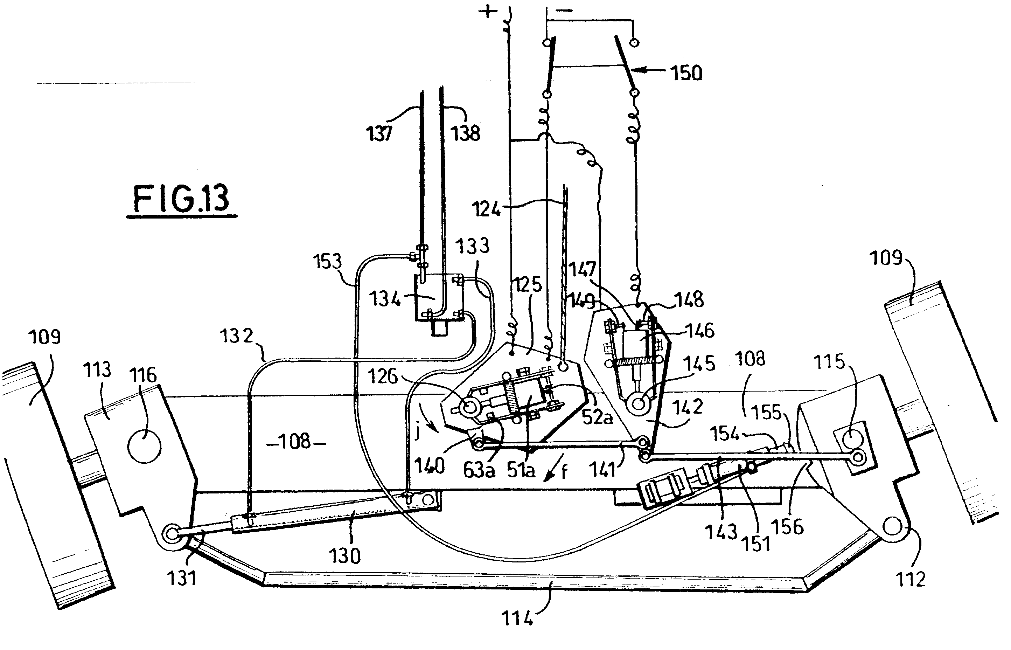

La platine 125 est articulée sur un axe 126 sur lequel est engagé un ressort de torsion tendant à la faire pivoter dans le sens de la flèche f (voir figure 13).

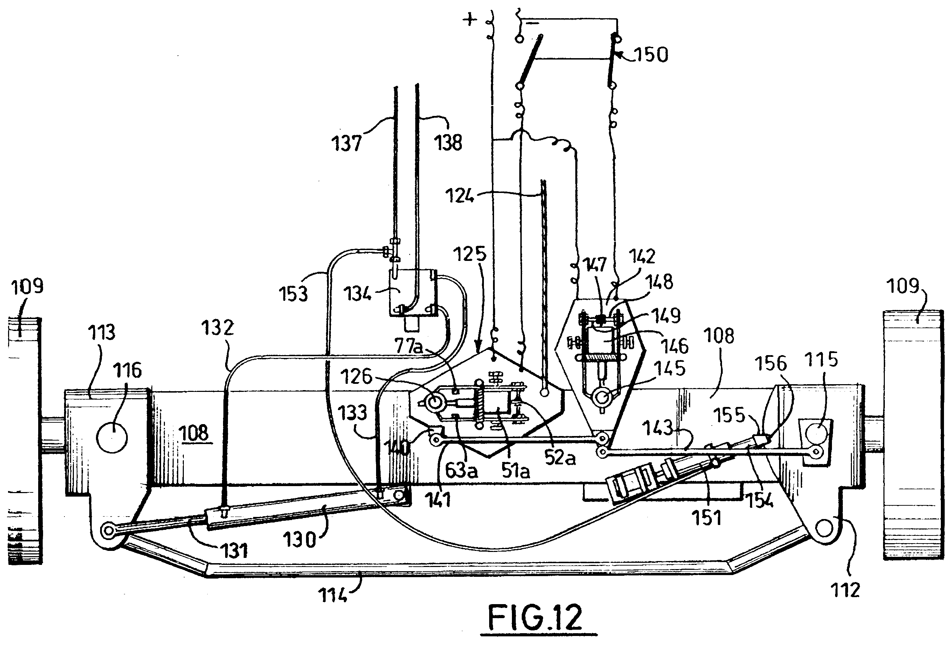

La platine 125 est du même type que la platine 50 et fonctionne de la même façon. Sur les figures 12 et 13, on a reporté les différentes références utilisées pour désigner les parties correspondantes de la platine 50 mais affectées de la lettre "a".

Sur le bâti 108 est articulé le corps d'un vérin 130 dont la tige du piston 131 est reliée à la chape 113. Le vérin 130 est un vérin à double effet et est relié par des conduits 132 et 133 à un distributeur 135 auquel aboutit une conduite 137 d'arrivée d'huile sous pression et comportant une conduite de retour 138 à une bâche.

La longueur du lien 124 est telle que, lorsque le tracteur 100 se déplace en ligne droite, la platine 125 occupe une position angulaire dans laquelle les roues 109 sont maintenues dans une position neutre afin que la remorque se déplace en ligne droite.

L'axe 126 est solidaire d'un bras radial 140 qui, par une biellette 141, est relié à une seconde platine 142 elle même reliée par une biellette 143 à la chape 112.

La platine 142 est articulée sur un axe 145 sur lequel est calé un contacteur 146 pourvu d'un bouton 147 susceptible d'être actionné par deux poussoirs 148 et 149.

La platine 142 est du même type que la platine 50 et ne sera pas décrite en détail. Toutefois, contrairement à l'axe 126, l'axe 145 est fixe de sorte que le contacteur 146 n'a aucun déplacement angulaire.

Les contacteurs 51a et 146 sont insérés sur des circuits avec interposition d'un inverseur 150 de manière que lorsque le contacteur 51a est sous tension, le contacteur 146 n'est pas alimenté et vice versa.

Il est prévu un vérin 151 de verrouillage pour bloquer les roues 109 dans une position neutre dans laquelle la remorque se déplace en ligne droite.

Le vérin 151 est un vérin à simple effet et comporte un ressort de rappel tendant à l'amener en position allongée de verrouillage. Il est relié par une conduite 153 à une dérivation de la conduite 137 d'arrivée d'huile sous pression.

L'extrémité libre de la tige du piston 154 du vérin 151 est terminée par un coin 155 destiné à s'insérer dans une échancrure 156.

Lorsque le tracteur tourne dans un sens et que le lien 124 est tiré, la platine 125 pivote dans le sens de la flèche j (voir figure 13), le poussoir 56a poussant le bouton 52a pour fermer alors le circuit de commande de manière que le vérin 130 soit alimenté par la conduite 132 afin de commander le raccourcissement du vérin 130 et qu'ainsi les roues 109 pivotent dans le sens correspondant à la direction du tracteur.

Au contraire, si le câble 124 est relâché le tracteur, tournant dans le sens opposé, la platine 125, sous l'action du ressort de torsion, pivote dans le sens contraire à la flèche j, le poussoir 56a s'écarte du bouton 52a et le poussoir 67a, en coopérant avec ledit bouton 52a, ferme le circuit commandant l'alimentation du vérin 130 par la conduite 133.

Au fur et à mesure que les roues 109 pivotent sur les axes 115 et 116, l'axe 126 entraîné par les biellettes 141 et 143 pivote ramenant ainsi le contacteur 51a vers une position dans laquelle les deux poussoirs 66a et 56a ramènent le bouton 52a vers une position neutre, les roues 109 restant dans la position angulaire ainsi obtenue jusqu'au moment où la platine 125 est déplacée angulairement soit par une traction du lien 124 ou au contraire un relâchement de celui-ci.

Durant ces divers déplacements angulaires des roues 109, le circuit du contacteur 146 reste ouvert.

Si on agit sur l'inverseur 150 (voir figure 12), l'ensemble des circuits de commande du contacteur 52a est ouvert, tandis que le contacteur 146, par l'intermédiaire du bouton 147, commandé soit par le poussoir 148, soit par le poussoir 149 suivant la position angulaire de la platine commande le distributeur 134 afin de ramener la roue 109 dans une position neutre dans laquelle la remorque est déplacée en ligne droite.

Lorsque cette position neutre est atteinte, les deux poussoirs 148 et 149 butent contre le bouton 147 ce qui engendre l'ouverture du circuit de commande du vérin 130 et comme il n'y a plus de pression dans la commande 137, la conduite 153 ne reçoit plus non plus l'huile sous pression de sorte que le ressort du vérin de verrouillage pousse la tige du piston 154 vers la position de verrouillage, le coin 155 s'insérant dans l'échancrure 156. Ainsi, les roues 109 sont maintenues bloquées dans la position neutre.

Bien entendu, l'invention n'est pas limitée aux modes de réalisation qui viennent d'être décrits et représentés. On pourra y apporter de nombreuses modifications de détail sans sortir pour cela du cadre de l'invention tel que défini dans les revendications qui suivent.

## Revendications

1. Installation de commande de l'orientation des roues arrières (10, 109) d'une remorque (7, 107) destinée au transport de machines et, plus particulièrement, de machines agricoles, ladite remorque (7, 107) présentant une plate-forme dont une extrémité antérieure est solidaire d'un timon (6, 106) sur lequel est articulée une barre d'attelage (3, 102) destinée à être reliée aux barres de relevage (2, 101) d'un tracteur (1, 100), tandis que l'extrémité postérieure est supportée par deux roues (10, 109) montées sur des chapes orientables solidaires d'axes (16, 115, 116) supportés par un bâti (9, 108) et reliées par une barre d'accouplement (17, 114), ledit bâti (9, 108) étant monté articulé à l'extrémité postérieure de la plate-forme avec interposition de vérins (11, 110) de manière que la plate-forme puisse être abaissée jusqu'au sol pour le chargement, puis après chargement soulevée pour le transport, ladite installation étant caractérisée en ce que le timon (6, 106) comporte un axe vertical (20, 118) sur lequel est monté tournant un manchon (25, 119) solidaire radialement d'une barre radiale (21, 120) reliée par une liaison cinématique (48, 124) à un organe de commande d'un vérin (83, 130) inséré entre la barre d'accouplement (17, 114) et le bâti (9, 108) et relié à un distributeur (80, 134), ledit organe de commande comportant un contacteur (51, 51a) relié par une liaison cinématique à l'un des axes (16, 115) d'orientation des roues (10, 105) et comportant un bouton (52, 52a) susceptible d'occuper une première position de commande de fermeture d'un circuit électrique de commande du distributeur (80, 134) pour engendrer l'allongement du vérin (83, 130), une seconde position de commande du raccourcissement du vérin (83, 130) et une position neutre dans laquelle lesdits circuits électriques sont ouverts, ladite liaison cinématique (48) étant reliée à des poussoirs (56, 67) pour commander le bouton (52) en fonction de la position angulaire de la barre radiale (21), des moyens étant prévus pour anihiler les moyens de commande de l'orientation des roues (10, 109) et maintenir une position neutre dans laquelle la remorque se déplace en ligne droite.

2. Installation de commande de l'orientation des roues arrières, selon la revendication 1, caractérisée en que le manchon (25) comporte une tige (26), des moyens élastiques (24) pour tendre à maintenir la tige (26) dans une position d'équilibre parallèle à l'axe du timon (6), la barre d'attelage (3) étant pourvue de taquets (41, 41a) destinés à coopérer avec la tige (26) de manière à faire basculer celle-ci dans un sens ou dans l'autre en correspondance avec l'orientation de ladite barre d'attelage (3).

3. Installation de commande de l'orientation des roues arrières, selon les revendications 1 et 2, caractérisée en ce que les taquets (41, 41a) sont montés basculants contre l'action des moyens élastiques (44).

4. Installation de commande de l'orientation des roues arrières, selon les revendications 1 et 2, caractérisée en ce que la tige (26) est de longueur réglable.

5. Installation de commande de l'orientation des roues arrières, selon la revendication 4, caractérisée en ce que la tige (26) comporte une douille (28) montée coulissante et terminée par une tête en forme de tronc de cône (43) coopérant avec les taquets (41, 41a).

6. Installation de commande de l'orientation des roues arrières, selon les revendications 4 et 5, caractérisée en ce que les ressorts de traction (31) sont insérés entre des pattes (29) solidaires de la douille (28) et des pattes solidaires du manchon (25), ladite douille étant reliée par un câble (34) à un levier (37) mobile le long d'un secteur cranté (39).

7. Installation de commande de l'orientation des roues arrières, selon les revendications 1 et 2, caractérisée en ce que le manchon (25) est solidaire d'un point intermédiaire médian d'une plaquette (22) dont les extrémités sont reliées par des ressorts (24) à un point fixe du timon (6) de manière à maintenir la tige (26) dans une position d'équilibre parallèle à l'axe du timon (6).

8. Installation de commande de l'orientation des roues arrières, selon la revendication 1, caractérisée en ce que la barre radiale (21) est reliée par une tringle (48) à une platine (50) montée pivotante librement sur un axe (16) relié à l'une des chapes de l'orientation des roues et sur lequel est fixé le contacteur (51), sur ledit axe étant montés tournant librement deux manchons (54, 55) dont l'un est solidaire d'un bras (55) et l'autre d'un second bras (66), les bras étant disposés de part et d'autre du contacteur (51) et supportant, chacun, un poussoir coopérant avec le bouton (52), des moyens élastiques tendant à rapprocher les bras l'un de l'autre et la platine (50) comportant deux butées (63, 77) destinées à coopérer l'une avec un bras et l'autre avec l'autre, de manière que lorsque la platine (50) est déplacée angulairement, l'un des bras s'écarte, tandis que le poussoir de l'autre bras, en coopérant avec le bouton (52), assure la fermeture du circuit électrique correspondant de commande du vérin (83) jusqu'à ce que le bouton (52) du contacteur, entraîné par la chape, vienne rencontrer le poussoir de l'autre bras pour ramener le bouton dans la position neutre.

9. Installation de commande de l'orientation des roues arrières, selon la revendication 8, caractérisée en ce que la barre radiale (120) est reliée à la platine (125) par un lien souple (124), celle-ci étant montée pivotante contre l'action d'un ressort de rappel.

10. Installation de commande de l'orientation des roues arrières, selon les revendications 8 et 9, caractérisée en ce que le bâti (108) comporte un vérin (151) de verrouillage des roues (109) dans la position neutre.

11. Installation de commande de l'orientation des roues arrières, selon les revendications 8, 9 et 10, caractérisée en ce que le vérin de verrouillage est un vérin à simple effet comportant un ressort de rappel tendant à l'amener en position verrouillée et il est relié au distributeur (134) sur une dérivation du circuit d'alimentation du vérin (130) de commande de l'orientation des roues (109) et il est prévu un circuit électrique de commande comportant un inverseur (150) pour couper l'alimentation du contacteur (81a) de la platine (125), afin que lorsque les roues occupent la position neutre, le vérin de verrouillage n'étant pas alimenté, il occupe automatiquement la position verrouillée.

12. Installation de commande de l'orientation des roues arrières, selon la revendication 11, caractérisée en ce que l'une des chapes (112) des roues (109) comporte une échancrure (156), tandis que le vérin de verrouillage (151) est pourvu d'un coin (155) destiné à s'insérer dans l'échancrure (156).

13. Installation de commande de l'orientation des roues arrières, selon la revendication 11, caractérisée en ce qu'entre la platine (125) et l'une des chapes (112) de l'orientation des roues (109), sur la liaison cinématique (141, 143), est insérée une seconde platine (142) tournant sur un axe fixe (145) sur lequel est calé un contacteur (146) pourvu d'un bouton (147), la seconde platine (142) comportant deux poussoirs (148, 149) coopérant avec le bouton (147) et susceptibles, l'un d'être écarté du bouton (147) lors du pivotement de la seconde platine dans un sens et l'autre dudit bouton (147) lors du pivotement de ladite seconde platine dans l'autre sens, ledit contacteur (146) étant relié à des circuits pour commander le distributeur pour ramener les roues en position neutre, dans cette position le contacteur coupant les circuits de commande de sorte que le vérin de verrouillage (151), sous l'action de son ressort de rappel vient occuper la position verrouillée.

## Claims

1. A control installation for steering the rear wheels (10, 109) of a trailer (7, 107) intended for the transport of machines and, more particularly, agricultural machines, the said trailer (7, 107) having a platform, one front end of which is integral with a drawbar (6, 106) on which a hitch (3, 102) is articulated, which is intended to be connected to lifting rods (2, 101) of a tractor (1, 100), whereas the rear end is supported by two wheels (10, 109) mounted on directable fork joints integral with shafts (16, 115, 116) supported by a supporting structure (9, 108) and connected by a connecting bar (17, 114), the said supporting structure (9, 108) being mounted articulated at the rear end of the platform with the interposition of cylinders (11, 110) so that the platform can be lowered to the ground for loading, then after loading raised for transport, the said installation being **characterised in that** the drawbar (6, 106) comprises a vertical shaft (20, 118) on which is rotatingly mounted a sleeve (25, 119) integral radially with a radial bar (21, 120) connected by a kinematic connection (48, 124) to a control member of a cylinder (83, 130) inserted between the connecting bar (17, 114) and the supporting structure (9, 108) and connected to a distributor (80, 134), the said control member comprising a contactor (51, 51a) connected by a kinematic connection to one of the shafts (16, 115) for steering the wheels (10, 105) and comprising a knob (52, 52a) capable of occupying a first position controlling the closing of an electric circuit controlling the distributor (80, 134) to bring about the lengthening of the cylinder (83, 130), a second position controlling the shortening of the cylinder (83, 130) and a neutral position in which the said electric circuits are open, the said kinematic connection (48) being connected to thrustors (56, 67) for controlling the knob (52) as a function of the angular position of the radial bar (21), means being provided to overcome the means for controlling the steering of the wheels (10, 109) and to maintain a neutral position in which the trailer moves in a straight line.

2. A control installation for steering the rear wheels, according to Claim 1,
**characterised in that** the sleeve (25) comprises a rod (26), resilient means (24) for tending to keep the rod (26) in a position of equilibrium parallel to the axis of the drawbar (6), the hitch (3) being provided with drivers (41, 41a) intended to cooperate with the rod (26) so as to make it swing in one direction or the other corresponding to the orientation of the said hitch (3).

3. A control installation for steering the rear wheels, according to Claims 1 and 2,
**characterised in that** the drivers (41, 41a) are mounted swinging against the action of the resilient means (44).

4. A control installation for steering the rear wheels, according to Claims 1 and 2,
**characterised in that** the rod (26) is of an adjustable length.

5. A control installation for steering the rear wheels, according to Claim 4,
**characterised in that** the rod (26) comprises a bushing (28) slidingly mounted and ending in a head in the shape of a truncated cone (43) cooperating with the drivers (41, 41a).

6. A control installation for steering the rear wheels, according to Claims 4 and 5,
**characterised in that** the draw springs (31) are inserted between lugs (29) integral with the bushing (28) and lugs integral with the sleeve (25), the said bushing being connected by a cable (34) to a lever (37) movable along a an indexed sector (39).

7. A control installation for steering the rear wheels, according to Claims 1 and 2,
**characterised in that** the sleeve (25) is integral with a median intermediate point of a plate (22), the ends of which are connected by springs (24) to a fixed point of the drawbar (6) so as to keep the rod (26) in a position of equilibrium parallel to the axis of the drawbar (6).

8. A control installation for steering the rear wheels, according to Claim 1,
**characterised in that** the radial bar (21) is connected by a rod (48) to a plate (50) mounted freely pivoting on a shaft (16) connected to one of the fork joints for the steering of the wheels and on which is fixed the contactor (51), on the said shaft two sleeves (54, 55) being freely rotatingly mounted, the one of which is integral with an arm (55) and the other with a second arm (66), the arms being disposed on either side of the contactor (51) and each supporting a thrustor cooperating with the knob (52), resilient means tending to bring the arms closer together and the plate (50) comprising two stops (63, 77) intended to cooperate one with one arm and the other with the other arm, in such a manner that, when the plate (50) is displaced angularly, one of the arms moves away, whereas the thrustor of the other arm, by cooperating with the knob (52), ensures the closing of the corresponding electric circuit controlling the cylinder (83) until the knob (52) of the contactor, driven by the fork joint, comes upon the thrustor of the other arm to bring the knob back into the neutral position.

9. A control installation for steering the rear wheels, according to Claim 8,
**characterised in that** the radial bar (120) is connected to the plate (125) by a flexible link (124), this being mounted pivoting against the action of a return spring.

10. A control installation for steering the rear wheels, according to Claims 8 and 9,
**characterised in that** the supporting structure (108) comprises a cylinder (151) for locking the wheels (109) in the neutral position.

11. A control installation for steering the rear wheels, according to Claims 8, 9 and 10,
**characterised in that** the locking cylinder is a simple-action cylinder comprising a return spring tending to bring it into the locked position and it is connected to the distributor (134) on a branch conduit supplying the cylinder (130) controlling the steering of the wheels (109) and an electric control circuit is provided which comprises an inverter (150) to cut off the supply to the contactor (81a) of the plate (125), so that when the wheels occupy the neutral position, when the locking cylinder is not supplied, it automatically occupies the locked position.

12. A control installation for steering the rear wheels, according to Claim 11,
**characterised in that** one of the fork joints (112) of the wheels (109) comprises a notch (156), whereas the locking cylinder (151) is provided with a wedge (155) intended to be inserted into the notch (156).

13. A control installation for steering the rear wheels, according to Claim 11,
**characterised in that** between the plate (125) and one of the fork joints (112) for steering the wheels (109), on the kinematic connection (141, 143), is inserted a second plate (142) rotating on a fixed shaft (145) on which a contactor (146) provided with a knob (147) is locked, the second plate (142) comprising two thrustors (148, 149) cooperating with the knob (147) and the one being capable of being moved away from the knob (147) during the pivoting of the second plate in one direction, and the other from the said knob (147) during the pivoting of the said second plate in the other direction, the said contactor (146) being connected to circuits in order to control the distributor to bring the wheels back into the neutral position, in this position the contactor cutting off the control circuits with the result that the locking cylinder (151), under the action of its return spring, comes to occupy the locked position.

## Patentansprüche

1. Steuereinrichtung zum Lenken der Hinterräder (10, 109) eines Anhängers (7, 107), der zum Transport von Maschinen, insbesondere von Landmaschinen, bestimmt ist, wobei der genannte Anhänger (7, 107) eine Ladefläche aufweist, an deren vorderem Ende eine Deichsel (6, 106) befestigt ist, an der eine Zugstange (3, 102) schwenkbar ist, die zur Verbindung mit Hubstangen (2, 101) des Schleppers (1, 100) vorgesehen ist, während das hintere Ende durch zwei Räder (10, 109) getragen ist, die an Achsschenkein angebracht sind, an denen Achsen (16, 115, 116) befestigt sind, die durch einen Rahmen (9, 108) gehalten und durch eine Spurstange (17, 114) verbunden sind, wobei der genannte Rahmen (9, 108) über eingefügte Arbeitszylinder (11, 110) am hinteren Ende der Ladefläche in der Weise gelenkig angeordnet ist, daß die Ladefläche bis zum Boden für die Beladung abgesenkt und nach der Beladung für den Transport angehoben werden kann, wobei die genannte Einrichtung dadurch gekennzeichnet ist, daß die Deichsel (6, 106) eine vertikale Achse (20, 118) aufweist, auf der eine Hülse (25, 119) drehbar gelagert ist, die radial mit einer radialen Stange (21, 120) verbunden ist, die über eine kinematische Verbindung (48, 124) mit einem Steuerorgan eines Arbeitszylinders (83, 130) verbunden ist, der zwischen die Spurstange (17, 114) und den Rahmen (9, 108) eingefügt und mit einem Steuerventil (80, 134) verbunden ist, wobei das genannte Steuerorgan einen Schalter (51, 51a) aufweist, der über eine kinematische Verbindung mit einer der die Räder (10, 105) lenkenden Achsen (16, 115) verbunden ist und einen Schalterknopf (52, 52a) aufweist, der eine erste Steuerstellung für das Schließen eines das Steuerventil (80, 134) steuernden elektrischen Stromkreises zum Bewirken eines Ausfahrens des Arbeitszylinders (83, 130), eine zweite Stellung zur Steuerung des Einfahrens des Arbeitszylinders (83, 130) sowie eine Neutralstellung einnehmen kann, in der die genannten elektrischen Stromkreise geöffnet sind, wobei die genannte kinematische Verbindung (48) mit Stößeln (56, 67) für die Steuerung des Schalterknopfes (52) in Abhängigkeit von der Winkelstellung der radialen Stange (21) verbunden ist, Mittel vorgesehen sind, um die Steuermittel für das Lenken der Räder (10, 109) unwirksam zu machen und eine Neutralstellung aufrechtzuerhalten, in der sich der Anhänger in gerader Linie bewegt.

2. Steuereinrichtung zum Lenken der Hinterräder nach Anspruch 1, dadurch gekennzeichnet, daß die Hülse (25) einen Schaft (26) aufweist, elastische Mittel (24), die den Schaft (26) in einer Gleichgewichtsstellung parallel zur Achse der Deichsel (6) zu halten suchen, und daß die Zugstange (3) mit Heben (41, 41a) versehen ist, die zur Zusammenwirkung mit dem Schaft (26) in der Weise bestimmt sind, daß sie diesen im einen oder anderen Sinne entsprechend der Ausrichtung der genannten Zugstange (3) schwenken.

3. Steuereinrichtung zum Lenken der Hinterräder nach den Ansprüchen 1 und 2, dadurch gekennzeichnet, daß die Hebel (41, 41a) gegen die Wirkung elastischer Mittel (44) schwenkbar angeordnet sind.

4. Steuereinrichtung zum Lenken der Hinterräder nach den Ansprüchen 1 und 2, dadurch gekennzeichnet, daß der Schaft (26) eine einstellbare Länge besitzt.

5. Steuereinrichtung zum Lenken der Hinterräder nach Anspruch 4, dadurch gekennzeichnet, daß der Schaft (26) eine Büchse (28) aufweist, die verschiebbar angeordnet ist und in einem Kopf in Form eines Kegelstumpfes (33) endigt, der mit den Hebeln (41, 41a) zusammenwirkt.

6. Steuereinrichtung zum Lenken der Hinterräder nach den Ansprüchen 4 und 5, dadurch gekennzeichnet, daß die Zugfedern (31) zwischen Laschen (29), die an der Büchse (28) befestigt sind, und an der Hülse (25) befestigten Laschen eingefügt sind, wobei die genannte Büchse über ein Seil (34) mit einem Hebel (37) verbunden ist, der längs eines mit Rasten versehenen Bogenstücks (39) bewegbar ist.

7. Steuereinrichtung zum Lenken der Hinterräder nach den Ansprüchen 1 und 2, dadurch gekennzeichnet, daß an der Hülse (25) eine mittlere Stelle einer Platte (22) befestigt ist, deren Enden über Federn (24) mit einem Festpunkt der Deichsel (6) in der Weise verbunden sind, um den Schaft (26) in einer Gleichgewichtsstellung parallel zur Achse der Deichsel (6) zu halten.

8. Einrichtung zum Steuern der Hinterräder nach Anspruch 1, dadurch gekennzeichnet, daß die radiale Stange (21) über eine Stange (48) mit einer Platte (50) verbunden ist, die frei schwenkbar auf einer Achse (16) angeordnet ist, die mit einem der Achsschenkel zum Lenken der Räder verbunden ist und auf der der Schalter (51) befestigt ist, wobei auf der genannten Achse zwei Hülsen (54, 55) frei drehbar sind, deren eine mit einem Arm (55) und die andere mit einem zweiten Arm (66) verbunden sind, die Arme zu beiden Seiten des Schalters (51) angeordnet sind und jeder einen Stößel trägt, der mit dem Schalterknopf (52) zusammenwirkt, elastische Mittel vorhanden sind, die die Arme aneinander anzunähern suchen, und die Platte (50) zwei Anschläge (63, 77) besitzt, von denen einer zur Zusammenwirkung mit einem der Arme und der andere zur Zusammenwirkung mit dem anderen bestimmt sind, dergestalt, daß, wenn die Platte (50) winkelmäßig bewegt wird, sich der eine Arm entfernt, während der Stößel des anderen Armes in Zusammenwirkung mit dem Schalterknopf (52) das Schließen des entsprechenden elektrischen Stromkreises für das Steuern des Arbeitszylinders (83) sicherstellt, bis der Schalterknopf (52) des Schalters, bewegt durch den Achsschenkel, zur Anlage am Stößel des anderen Armes kommt, um den Schalterknopf in die Neutralstellung zurückzuführen.

9. Steuereinrichtung zum Lenken der Hinterräder nach Anspruch 8, dadurch gekennzeichnet, daß die radiale Stange (120) über eine flexible Leine (124) mit der Platte (125) verbunden ist, welche gegen die Wirkung einer Rückstellfeder schwenkbar angeordnet ist.

10. Steuereinrichtung zum Lenken der Hinterräder nach den Ansprüchen 8 und 9, dadurch gekennzeichnet, daß der Rahmen (108) einen Arbeitszylinder (151) zur Verriegelung der Räder (109) in der Neutralstellung aufweist.

11. Steuereinrichtung zum Lenken der Hinterräder nach den Ansprüchen 8, 9 und 10, dadurch gekennzeichnet, daß der Verriegelungs-Arbeitszylinder ein einfach wirkender Zylinder ist, der eine Rückzugsfeder aufweist, die versucht, eine Verriegelungsstellung herzustellen, und er mit dem Steuerventil (134) über eine Abzweigung des Versorgungskreises des Arbeitszylinders (130) für die Steuerung der Lenkung der Räder (109) verbunden ist und daß ein elektrischer Steuerstromkreis vorgesehen ist, der einen Umschalter (150) aufweist, um die Versorgung des Schalters (81a) der Platte (125) zu unterbrechen, damit, wenn die Räder die Neutralstellung einnehmen und der Verriegelungs-Arbeitszylinder nicht versorgt wird, er selbsttätig die Verriegelungsstellung einnimmt.

12. Steuereinrichtung zum Lenken der Hinterräder nach Anspruch 11, dadurch gekennzeichnet, daß einer der Achsschenkel (112) der Räder (109) eine Aussparung (156) aufweist und daß der Verriegelungs-Arbeitszylinder (151) mit einem Keil (155) versehen ist, der zum Einfallen in die Aussparung (156) bestimmt ist.

13. Steuereinrichtung zum Lenken der Hinterräder nach Anspruch 11, dadurch gekennzeichnet, daß zwischen der Platte (125) und einem der Achsschenkel (112) zum Lenken der Räder (109) an der kinematischen Verbindung (141, 143) eine zweite Platte (142) eingefügt ist, die auf einer festen Achse (145) drehbar ist, auf der ein Schalter (146) festgelegt ist, der mit einem Schalterknopf (147) versehen ist, daß die zweite Platte (142) zwei Stößel (148, 149) aufweist, die mit dem Schalterknopf (147) zusammenwirken und von denen einer beim Schwenken der zweiten Platte in einer Richtung vom Schalterknopf (147) wegbewegt wird und beim Schwenken der genannten zweiten Platte in der anderen Richtung der andere vom genannten Schalterknopf (147) wegbewegt wird, wobei der genannte Schalter (146) mit den Stromkreisen verbunden ist, um das Steuerventil zu steuern, um die Räder in die Neutralstellung zurückzubringen, in welcher Stellung der Schalter die Steuerstromkreise so unterbricht, daß der Verriegelungs-Arbeitszylinder (151), unter Einwirkung seiner Rückzugsfeder, in die Verriegelungsstellung gelangt.
